# EUROPÄISCHE PATENTSCHRIFT

(11) **EP 1 457 710 B1**
(45) Veröffentlichungstag und Bekanntmachung des Hinweises auf die Patenterteilung: **14.09.2005**
(21) Anmeldenummer: 04005527.9
(22) Anmeldetag: 09.03.2004
(51) Int. Cl.: F16H 25/24

(54) **Linearantrieb mit einer Notverstelleinrichtung**
Linear actuator with emergency adjustment device
Actionneur linéaire avec dispositif d'ajustement de sécurité

(30) Priorität: 14.03.2003 CH 4232003
(43) Veröffentlichungstag der Anmeldung: 15.09.2004
(73) Patentinhaber: AB SKF, 41550 Göteborg (SE)
(72) Erfinder: Soltermann, Marcel, 4244 Röschenz (CH)
(74) Vertreter: EGLI-EUROPEAN PATENT ATTORNEYS

(56) Entgegenhaltungen:
- EP-A- 0 685 662
- CH-A- 692 805
- DE-A- 19 950 689

## Beschreibung

Die Erfindung betrifft einen Linearantrieb mit einer antriebsseitig von einem Motor rotativ antreibbaren Spindel, deren Rotationsbewegung zur Lastseite des Linearantriebs hin in eine translatorische Bewegung eines mit der Spindel wirkverbundenen Schubrohres transformierbar ist, wobei eine drehfeste Verbindung des Schubrohres mit einem Verbindungsteil, mit dem der Linearantrieb an einer zu verstellenden Last anschliessbar ist, mittels einer (Not-)Verstelleinrichtung lösbar ist, um eine motorunabhängige Längenänderung des Linearantriebs zu ermöglichen, und wobei die (Not-)Verstelleinrichtung mit einer Bremse versehen ist, mit der ein durch eine Verschiebekraft bedingtes Drehmoment vom Schubrohr auf den Verbindungsteil übertragbar ist und eine von der Lastseite eingeleitete Verschiebekraft in Form eines Bremsdrehmomentes zumindest teilweise aufnehmbar ist. Ein derartiger Linearantrieb ist u.a. aus der CH 695 805 A bekannt.

Bei derartigen Linearantrieben wird eine rotative Antriebsbewegung eines Motors in eine lineare Nutzbewegung umgewandelt, wie dies beispielsweise bei Antrieben für Betten, Patientenbetten, sowie bei weiteren medizinaltechnischen oder Industrie-Anwendungen oftmals vorgesehen ist. In den meisten Fällen weist die Spindel derartiger Linearantriebe ein Aussengewinde auf, in dem eine Mutter relativ zur Spindel dreh- und hierdurch auch längsverschiebbar angeordnet ist. Die translatorische Relativbewegung der Mutter gegenüber der Spindel wird dann auf ein mit der Mutter wirkverbundenes Schubrohr übertragen. Am Schubrohr oder mit dem Schubrohr verbunden weisen derartige Linearantriebe einen Verbindungsteil, wie beispielsweise einen Gabelkopf auf, an dem eine zu bewegende Last befestigt werden kann. Die Längsbewegung des Schubrohrs wird zur Bewegung der Last genutzt.

Insbesondere bei Anwendungen im Medizinalbereich soll oftmals eine motorunabhängige Verstellung des Linearantriebs möglich sein. Eine solche Verstellung wird unter anderem dann von Bedeutung, wenn entweder antriebsseitig ein Defekt auftritt, beispielsweise der Motor ausfällt, oder aber eine kontrollierte und antriebsunabhängige Verstellung erforderlich ist. Eine solche Möglichkeit der Benutzung des Linearantriebs kann auch sinnvoll sein, um eine kontrollierte Verstellung des Linearantriebs mit einer Verstellgeschwindigkeit zu ermöglichen, die die mit dem Motor erzielbare Verstellgeschwindigkeit des Schubrohrs übersteigt. So kann die Verstelleinrichtung auch als sogenannte Notabsenkung benutzt werden, mit der beispielsweise in einem Notfall ein Kopfteil eines Bettes kontrolliert und schnell genug in eine horizontale Lage überführt werden kann. Da der Linearantrieb bei derartigen Verstellungen in der Regel mit der Last belastet ist, und oftmals nicht selbsthemmende Gewinde bei der Spindel zum Einsatz kommen, kann eine Bremse erforderlich sein. Mit der Bremse wird ein Bremsdrehmoment erzeugt, das dem durch die Last auf den Linearantrieb wirkende Lastdrehmoment entgegenwirkt.

Es sind hierbei zwei prinzipiell unterschiedliche Gattungen bekannt geworden. Bei der einen befindet sich die Verstelleinrichtung auf der Antriebsseite, d.h. in Bezug auf einen Kraftfluss des Linearantriebs zwischen dem Motor und der Mutter. Bei der anderen Gattung, zu der auch die vorliegende Erfindung gehört, ist die Verstelleinrichtung zwischen der Mutter und dem Verbindungsteil (also auf der Abtriebsseite) vorgesehen, an dem die jeweilige Last befestigt werden kann.

Zur letztgenannten Gattung gehört auch ein von dem Unternehmen Linak A/S, Dänemark, unter der Produktbezeichnung LA 31 angebotener Linearantrieb. Bei diesem weist die Schnellverstellung einen Hebel auf, mit dem auf eine Hülse gegenüber einer innerhalb der Hülse angeordneten Schlingenfeder (auch als Umschlingungsfeder bekannt) verdreht werden kann. Die gegenüber dem Gabelkopf drehfest angeordnete Schlingenfeder ist Bestandteil einer Schlingenfederbremse, mit der im Zusammenhang mit einer Schnellverstellung das erforderliche Bremsmoment erzielt werden soll. Die Hülse greift aufgrund ihrer Verdrehung an einen der zapfenförmigen Enden der Schlingenfeder an. Dies bewirkt ein Aufweiten des Durchmessers der Schlingenfeder, was wiederum eine Innenfläche der Feder von einer Bremsfläche des Schubrohres und damit die Bremse löst. Über die Grösse der Schwenkbewegung kann die jeweils verbleibende Bremskraft und die Verstellgeschwindigkeit variiert werden.

Trotz der Variierbarkeit der Verstellgeschwindigkeit beim Einfahren des Schubrohres kann diese vorbekannte Lösung nicht vollständig zufrieden stellen. Problematisch ist nämlich die zusätzlich vorhandene erhebliche Abhängigkeit der Verstellgeschwindigkeit des Linearantriebes von der Grösse der auf den Verbindungsteil wirkenden Last. Dies kann sich insbesondere im Zusammenhang mit einem wichtigen Anwendungsfall derartiger Verstelleinrichtungen auswirken, nämlich als Notabsenkung des Linearantriebs bei Notfällen. In diesen Fällen ist die Gefahr gross, dass sich ein Bediener des Linearantriebs auf andere Dinge konzentriert als die Auswirkungen der von ihm vorgenommenen Schwenkbewegung des Hebels auf den Linearantrieb. Es sind deshalb unkontrollierte Absenkungen des Schubrohres zu befürchten, die deutlich zu schnell erfolgen. Trifft das Schubrohr dann mit hoher Geschwindigkeit abrupt auf einen Endanschlag auf, kann dies auf den Zustand von beispielsweise einem Notfallpatienten ernsthafte Folgen haben. Zudem kann dadurch der Linearantrieb beschädigt werden.

Der Erfindung liegt deshalb die Aufgabe zugrunde, die Kontrollierbarkeit der Bewegung des Schubrohrs bei einer Betätigung der Verstelleinrichtung von einem gattungsgemässen Linearantrieb zu verbessern.

Die Erfindung wird bei einem Linearantrieb der eingangs genannten Art erfindungsgemäss dadurch gelöst, dass mittels einem Betätigungselement der Verstelleinrichtung bestimmte Verstelllängen des Schubrohres einstellbar sind, um die hierdurch das Schubrohr für eine Bewegung mit zumindest einer Bewegungskomponente entlang der Längsbewegungsachse freigegeben wird, wobei aufgrund der Freigabe das Schubrohres durch eine über den Verbindungsteil auf das Schubrohr wirkenden Verschiebekraft bewegbar ist. Durch die erfindungsgemässe Massnahme sind Verstelllängen einstellbar, die kleiner sind als die maximale Verfahrstrecke entlang der Längsbewegungsachse des Schubrohrs, bezogen auf dessen jeweilige Bewegungsrichtung. Ausgehend von beliebigen Positionen des Schubrohres zwischen seinen beiden Endpositionen sind mit der Erfindung mehrere, vorzugsweise stufenlos beliebige, Verstelllängen einstellbar.

Die Erfindung beruht somit auf dem Gedanken, durch eine Betätigung der Verstelleinrichtung das Schubrohr nicht grundsätzlich frei zu geben. An der Verstelleinrichtung wird vielmehr durch eine Verstellung eines Betätigungselementes eine entsprechende Einstellung vorgegeben, die einer bestimmten Verstelllänge des Schubrohres entspricht. Die auf das Schubrohr wirkende Last kann das Schubrohr um diese Verstelllänge gegenüber der Spindel verschieben. Für die Erzeugung der Verschiebebewegung des Schubrohres selbst, ist somit weder ein weiterer Antrieb noch eine zusätzliche Manipulation durch einen Bediener erforderlich. Bei Erreichen der voreingestellten Soll-Verstelllänge wird das Schubrohr durch die Bremse angehalten. Falls das Schubrohr eine grössere Strecke zurücklegen soll, so kann das Betätigungselement hierzu auch mehrmals betätigt werden.

Die erfindungsgemässe Lösung stellt somit sicher, dass bei einer Betätigung der Verstelleinrichtung der mit einer Last beaufschlagte Linearantrieb nicht unkontrolliert ablaufen kann.

In einer bevorzugten Ausgestaltung weist die Verstelleinrichtung ein Betätigungselement auf, das durch eine Drehbewegung relativ zum Verbindungsteil des Linearantriebes das Schubrohr für Drehbewegungen freigibt. In zweckmässiger Weise entspricht hierbei ein bestimmter Drehwinkel des Betätigungselementes einer bestimmten Verstelllänge des Schubrohres. Eine günstige Ausgestaltung dieser Lösung kann als Betätigungselement einen konzentrisch zum Schubrohr angeordneten Drehring vorsehen. Hierdurch kann eine einfache und unkomplizierte Bedienung der Verstelleinrichtung sichergestellt werden.

In einer weiteren bevorzugten erfindungsgemässen Ausgestaltung, die im Zusammenhang mit gattungsgemässen Linearantrieben auch selbstständige Bedeutung hat, kann die Bremse mit einer ersten und einer zweiten Bremseinrichtung versehen sein. Beide Bremseinrichtungen können zur Abbremsung des Schubrohres jeweils eine Bremskraft zur Verfügung stellen. Die Bremskräfte werden vorzugsweise als Bremsdrehmoment genutzt.

Hierbei kann es vorteilhaft sein, wenn die Bremskraft der ersten Bremseinrichtung nicht ausreicht um das über das Verbindungsteil belastete Schubrohr zu stoppen. Die primäre Aufgabe der ersten Bremseinrichtung kann deshalb darin gesehen werden, die Geschwindigkeit des Schubrohrs nicht über kritische Werte ansteigen zu lassen. Die erste Bremseinrichtung kann nicht schaltbar und somit ständig wirksam sein.

Die zweite Bremseinrichtung kann hingegen mit dem Betätigungselement wirkverbunden sein. Eine Betätigung des Betätigungselements sollte somit die zweite Bremseinrichtung lösen, so dass diese momentan kein oder höchstens nur ein geringes Bremsmoment liefert. Da das aus der Last resultierende Drehmoment grösser ist als das Bremsmoment der ersten Bremseinrichtung, bewirkt das Fehlen eines Bremsmoments der zweiten Bremseinrichtung, dass die Last das Schubrohr auf der Spindel so weit verschiebt, wie dies durch die Betätigung vorgegeben wurde. Da von der auf den Linearantrieb insgesamt wirkenden Last stets nur noch ein Anteil in Form eines resultierenden Drehmoments zum Schubrohr gelangt, kann hiermit auf eine besonders günstige Weise eine kontrollierte Verstellung des Schubrohres erfolgen.

Hat das Schubrohr sich über die vorgegebene Strecke verschoben, so wird die zweite Bremseinrichtung wirksam, ohne dass es hierfür einer weiteren Manipulation bedarf. Die sich addierenden Bremsmomente der ersten und der zweiten Bremseinrichtung stoppen dann die Bewegung des Schubrohres. Das Schubrohr hat sich nun entlang der Längsbewegungsachse um die voreingestellte Verstelllänge bewegt.

In einer vorteilhaften konstruktiven Weiterbildung kann zumindest eine der beiden Bremseinrichtungen als Schlingenfederbremse (oder auch Umschlingungsfederbremse genannt) ausgebildet sein. Es ist hierbei bevorzugt, wenn die schalt- bzw. betätigbare Bremseinrichtung eine solche als Schraubenfeder gewickelte Schlingenfeder aufweist. Schlingenfederbremsen haben den Vorteil, sehr schnell anzusprechen und damit sehr schnell das erforderliche Bremsmoment zur Verfügung zu stellen.

Ein weiterer Vorteil von Schlingenfederbremsen im Zusammenhang mit der vorliegenden Erfindung besteht darin, dass zu ihrer Betätigung eine rotative Schaltbewegung erforderlich ist. Da in bevorzugten Ausführungsformen das Betätigungselement Drehbewegungen ausführen soll, ist für eine Wirkverbindung zwischen dem Betätigungselement und der Schlingenfeder nur ein geringer konstruktiver Aufwand erforderlich.

In einer weiteren bevorzugten Ausführungsform dreht sich die schraubenförmige Schlingenfeder bei einer Bewegung des Betätigungselements mit. Sobald die Einstellbewegung des Betätigungselements ausgeführt ist und dieses von aussen nicht mehr bewegt wird, stoppt auch die Schlingenfeder und erzeugt daraufhin ihre Bremswirkung an einer Bremsfläche des Linearantriebs. Bis auf mögliche geringe Relativbewegungen ist bei dieser vorteilhaften Ausführungsform der Erfindung die Schlingenfeder mit dem Betätigungselement drehfest verbunden.

Es ist zwar bevorzugt, die Eigenschaften eines erfindungsgemässen Linearantriebs zum Einfahren des Schubrohres, d.h. zur Verkleinerung der Länge des Linearantriebes, zu nutzen. Grundsätzlich ist es aber auch möglich, die Längenänderung motorisch vorzunehmen. So kann beispielsweise vorgesehen sein, durch das Betätigungselement einzustellen, um welche Länge das Schubrohr verfahren kann. Bei Erreichen der vorgegebenen Längenänderung kann aufgrund des steigenden Bremsmoments ein Überlastschutz die motorische Antriebsbewegung stoppen.

Weitere bevorzugte Ausgestaltungen der Erfindung ergeben sich aus den Ansprüchen und den Zeichnungen.

Die Erfindung wird anhand eines in den Figuren rein schematisch dargestellten Ausführungsbeispiels näher erläutert, es zeigen:
- Fig. 1: eine perspektivische Darstellung eines erfindungsgemässen Linearantriebs;
- Fig. 2: ein lastseitiges Ende des Linearantriebs mit einer Verstelleinrichtung in einer perspektivischen Darstellung;
- Fig. 3: eine teilweise geschnittene perspektivische Darstellung der Verstelleinrichtung aus Fig. 2;
- Fig. 4: die Verstelleinrichtung aus Fig. 2 und Fig. 3 in einem Längsschnitt;
- Fig. 5: ein Querschnitt entlang der Linie V-V in Fig. 4;
- Fig. 6: ein Kopplungselement einer Bremseinrichtung;
- Fig. 7: eine Schraubenfeder einer Bremseinrichtung.

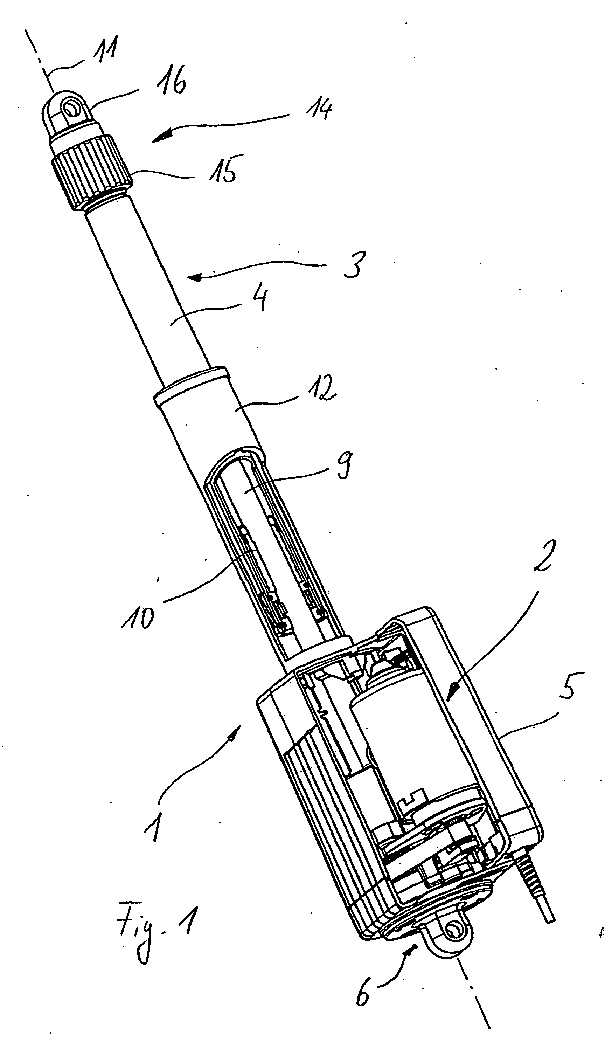

Der in Fig. 1 gezeigte Linearantrieb weist auf einer Antriebsseite 1 einen elektrischen Motor 2 auf, mit dessen rotativer Antriebsbewegung eine Längsbewegung eines auf einer Abtriebsseite 3 vorgesehenen Schubrohres 4 bewirkt wird. An einem Gehäuse 5 des Motors 2 ist ein antriebsseitiger Gabelkopf 6 vorgesehen, mit dem der Linearantrieb in eine Anlage, medizinisches Inventar, ein Möbel, eine Maschine oder dergleichen, befestigt werden kann. Hauptsächliche Anwendungsfälle sind Patientenbetten, Operationstische und ähnliches.

Eine Rotationsbewegung einer Motorwelle wird auf eine Spindel 9 übertragen, die ein nicht selbsthemmendes Aussengewinde aufweist. Um die Rotationsbewegung des Motors 2 ins Langsame zu transformieren, kann zwischen dem Motor 2 und die Spindel 9 ein Getriebe, insbesondere ein Zahnradgetriebe wie beispielsweise ein Planetengetriebe, zwischengeschaltet sein.

Auf der Spindel 9 befindet sich eine Gewindemutter 10. Die Gewindemutter 10 ist mit dem Schubrohr 4 verbunden und in Normalbetrieb gegenüber der Spindel 9 mittels einer Schnellverstelleinrichtung 14 drehfest angeordnet. Das Schubrohr 4 kann hierdurch entlang einer Längsbewegungsachse 11 aus einem Mantelrohr 12 ein- und ausgefahren werden. Sowohl die Spindel 9, die Gewindemutter 10, das Mantelrohr 12, als auch das Schubrohr 4 sind konzentrisch zur Längsbewegungsachse 11 angeordnet, die gleichzeitig auch Rotationsachse der Spindel 4 ist. Die Längsbewegung des Schubrohres 4 erfolgt aufgrund einer Drehbewegung der Spindel 9, die in an sich vorbekannter Weise in eine translatorische Bewegung der Gewindemutter 10 umgesetzt wird.

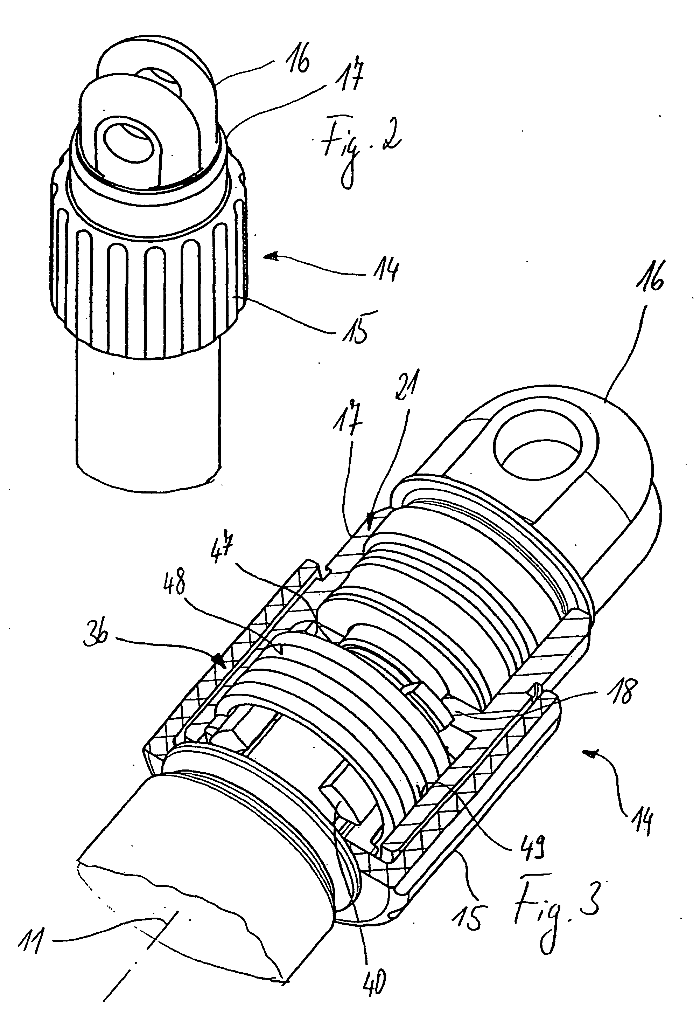

Am oberen Ende des Schubrohres 4 befindet sich die in den Fig. 2 bis 5 näher dargestellte Schnellverstelleinrichtung 14, die einen von aussen zugänglichen Drehring 15 aufweist. Auch der Drehring 15 ist konzentrisch zur Längsbewegungsachse 11 angeordnet. An den Drehring 15 schliesst sich ein lastseitiger Gabelkopf 16 an, an dem eine von dem Linearantrieb zu bewegende und nicht näher dargestellte Last befestigt werden kann.

Der Gabelkopf 16 ist drehfest im oberen Ende einer Aufnahmehülse 17 befestigt. Auf einer oberen Seite eines radialen inneren Absatzes 18 der Aufnahmehülse 17 sind ringförmige erste und zweite Bremsscheiben 19, 20 einer ersten Bremseinrichtung 21 vorgesehen. Die Bremsscheiben 19, 20 weisen Bremsflächen auf und liegen jeweils gegen unterschiedliche Stirnseiten 24a, 24b eines Ringes 24 an. Der Ring 24 ist auf ein oberes Ende eines Aufnahmekörpers 25 aufgeschoben. Eine auf ein Gewinde 26 des Aufnahmekörpers 25 aufgeschraubte Sicherungsmutter 27 drückt den Ring 24 in Richtung Schubrohr 4. Hierdurch wird auch die Lage der ersten Bremsscheibe 19 gesichert. Diese ist mit einer Bremsfläche unmittelbar gegenüber einer Reibscheibe 28 angeordnet, die auf dem radialen Absatz 18 der Aufnahmehülse 17 aufliegt. Zwischen dem radialen Absatz 18 und einer Mantelfläche 29 des Ringes 24 ist ein Gleitlager 30 vorgesehen, das zur radialen Zentrierung des Ringes 24 dient.

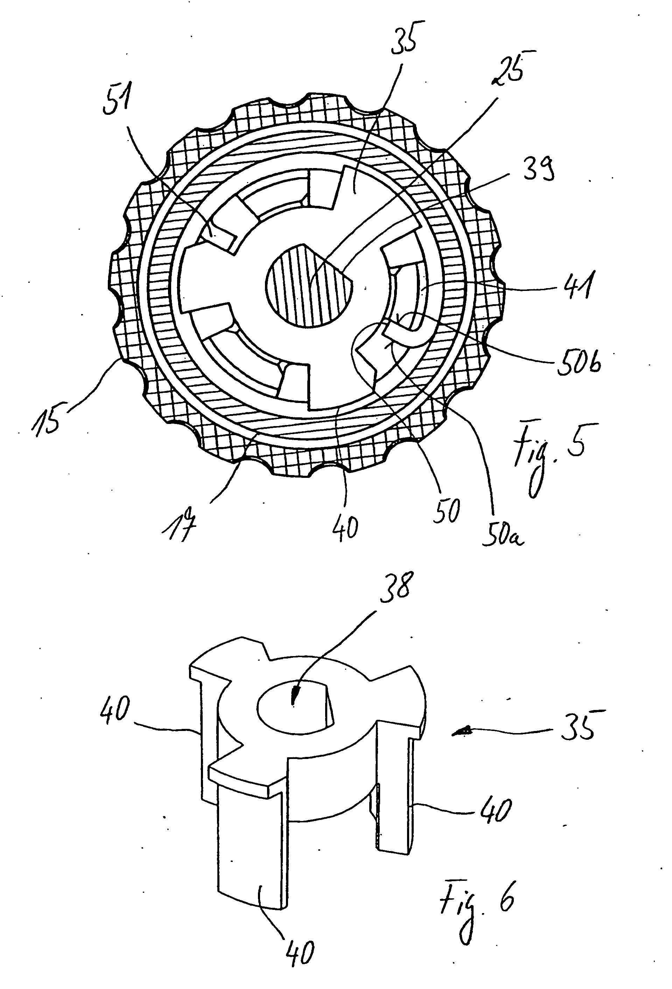

Mit einer dem Gabelkopf 16 abgewandten endseitigen Stirnfläche 31 des Ringes 24 liegt letztgenannter gegen eine äussere Stirnfläche eines ringförmigen Bodenteils 34 eines ersten Kopplungselementes 35 an. Dieses, in Fig. 6 einzeln gezeigte, erste Kopplungselement 35 ist Bestandteil einer zweiten Bremseinrichtung 36, die als Schlingenfederbremse ausgebildet ist. Die zweite Bremseinrichtung 36 befindet sich unterhalb des radialen Absatzes 18.

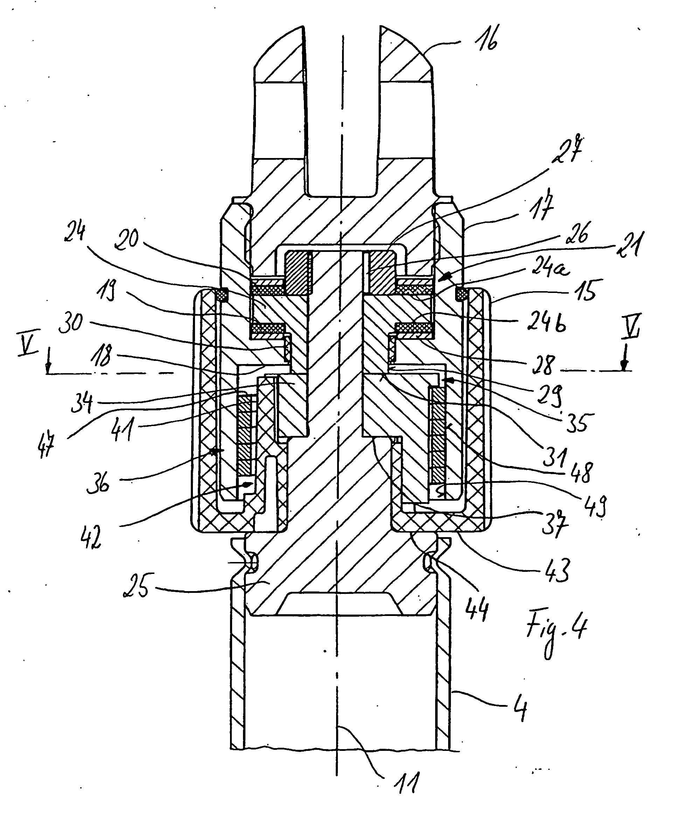

Mit seiner Innenseite liegt das Bodenteil 34 gegen einen ersten Absatz 37 des Aufnahmekörpers 25 an. Die Sicherungsmutter 27 drückt hierbei über den Ring 24 das erste Kopplungselement 35 gegen den Absatz 37. Das Bodenteil 34 hat im Bereich der Längsbewegungsachse 11 eine Ausnehmung 38, durch die der Aufnahmekörper 25 hindurchgeführt ist (Fig. 4, Fig. 5). Mit einer Abflachung 39 seiner ansonsten kreisrunden Querschnittsform liegt der Aufnahmekörper 25 gegen eine entsprechende Abflachung der Ausnehmung 38 an, wie dies unter anderem aus der Querschnittsdarstellung von Fig. 5 ersichtlich ist. Hierdurch ist das erste Kopplungselement 35 drehfest auf dem Aufnahmekörper 25 gesichert.

Gleichmässig am Umfang des Bodenteils verteilt, erstrecken sich drei voneinander beabstandete Klauen 40 des ersten Kopplungselementes 35 parallel zur Längsbewegungsachse in Richtung auf das Schubrohr. Anstelle von drei Klauen 40 könnte jedoch auch eine andere Anzahl an Klauen 40 vorgesehen sein.

Zwischen jeweils zwei Klauen 40 des ersten Kopplungselementes 35 ist jeweils mit Abstand eine Klaue 41 eines zweiten Kopplungselementes 42 angeordnet. Die freien Enden der Klauen 41 liegen somit unmittelbar dem Bodenteil 34 des ersten Kopplungselementes 35 gegenüber. Auch die Klauen 41 des zweiten Kopplungselementes 42 verlaufen im Wesentlichen parallel zur Längsbewegungsachse 11. Die Klauen 41 sind über einen stirnseitigen Ringabschnitt 43 einstückig mit dem Drehring 15 verbunden, dessen Längserstreckung ebenfalls im Wesentlichen parallel zu den Klauen 40, 41 ausgerichtet ist. Der Drehring 15 liegt mit seinem Ringabschnitt 43 gegen einen weiteren Absatz 44 des Aufnahmekörpers 25 an. Die Klauen 40, 41 befinden sich somit innerhalb des Drehrings 15.

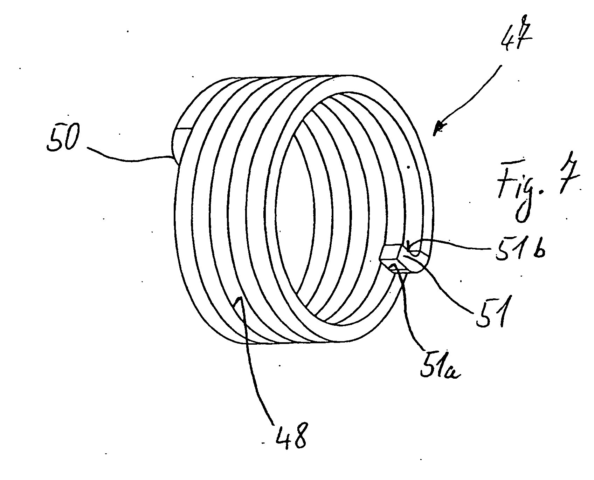

Die Klauen 40, 41 beider Kopplungselemente 35, 42 sind von einer Schraubenfeder 47 umgeben. Die in Fig. 7 einzeln dargestellte Schraubenfeder 47 ist dabei mit einer geringen Steigung gewickelt, so dass aufeinander folgende Windungen sehr nahe beieinander liegen, nach Möglichkeit aneinander anliegen. Eine Länge der Schraubenfeder 47 in Richtung der Längsbewegungsachse 11 entspricht etwa der Länge der Klauen 40, 41.

Eine äussere, als Bremsfläche fungierende Fläche 48 der Schrauben- bzw. Umschlingungsfeder 47 liegt gegen eine Innenfläche 49 der Aufnahmehülse 17 an. Wie insbesondere aus Fig. 5 ersichtlich ist, sind die beiden Enden 50, 51 der Schraubenfeder 47 nach innen umgebogen und jeweils zwischen zwei Klauen 40, 41 der beiden Kopplungselemente 35, 42 eingeführt. Die beiden Enden 50, 51 wirken als Mitnehmer und können - wie nachfolgend noch näher erläutert ist - durch eine Drehbewegung der Kopplungselemente 35, 42 in Anlage gegen Seitenflächen von Klauen 40, 41 gelangen.

Bei einer beginnenden Drehbewegung der Spindel 9 aufgrund einer Antriebsbewegung des Motors ist es möglich, dass die Schraubenfeder 47 mit der Aufnahmehülse 17 zunächst nicht vollständig drehfest verbunden ist. Da jedoch das erste Kopplungselement 35 mit dem Schubrohr 4 drehfest verbunden ist und somit mitdreht, kommt eine Klaue 40 des ersten Kopplungselementes 35 in Anlage gegen eine Aussenseite 50a, 51a eines Endes 50, 51 der Schraubenfeder 47. Bereits nach einem sehr kleinen Drehwinkel wird hierdurch der Durchmesser der Schraubenfeder 47 geweitet. Diese kommt damit sukzessive mit ihrer gesamten äusseren Fläche 48 in Anlage gegen die Innenfläche 49 der Aufnahmehülse 17. Durch den sich daraus ergebenen Reibschluss wird eine drehfeste Verbindung zwischen dem Schubrohr 4 und der Aufnahmehülse 17 - und damit auch dem Gabelkopf 16 - erzeugt. Dies gilt unabhängig von der Drehrichtung der Spindel 9. Da der Gabelkopf 16 an der zu bewegenden Last wiederum drehfest verbunden ist, wird die Drehbewegung der Spindel in eine ausschliesslich translatorische Vorschubbewegung des Gabelkopfes 16 umgesetzt.

Soll hingegen mittels der (Not-)Verstelleinrichtung 14 das Schubrohr 4 in Lastrichtung in das Mantelrohr 12 eingefahren werden, so muss hierzu der Drehring 15 relativ zum Mantelrohr 12 gedreht werden. Hierdurch gelangt eine der Klauen 41 in Anlage gegen eines der Enden 50, 51 der Schraubenfeder. Die Klaue 41 drückt gegen eine der Innenseiten 50b, 51b der Schraubenfeder 47, wodurch sich diese zusammenzieht. Die damit verbundene Verringerung des Durchmessers der Schraubenfeder 47 löst den Reibschluss zwischen der Schraubenfeder 47 und der Aufnahmehülse 17.

Drückt nun eine Last, beispielsweise als Gewichtskraft, auf den Gabelkopf 16, so wird diese Belastung über den Gabelkopf 16 auf die Reibscheibe 22 und die zweite Bremsscheibe 20 eingeleitet. Von dort verläuft der Kraftfluss über den Ring 24 in den Bodenteil 34 des Kopplungselements 35 und dann in den Aufnahmekörper 25. Letzterer überträgt die Druckkraft der Last über das Schubrohr 4 in die Spindel 9. Da das Gewinde der Spindel 9 nicht selbsthemmend ist, beginnt die Mutter 10 auf dem Gewinde der Spindel 9 abzulaufen. Die Reibung zwischen der Bremsscheibe 20 und einer ihr gegenüberliegenden Reibscheibe 22 nimmt einen Teil der von der Last ausgehenden Energie auf. Lediglich der verbleibende Energieanteil wirkt noch als Drehmoment und damit als Rotationsenergie auf die Gewindemutter 10. Da die Spindel 9 durch den Motor arretiert ist, beginnt somit die Mutter 10 auf der Spindel 9 abzulaufen, wodurch das Schubrohr in das Mantelrohr einläuft.

Die Drehbewegung der Gewindemutter 10 beginnt unmittelbar nachdem mit dem Drehring 15 der Durchmesser der Schraubenfeder 47 verkleinert wurde. Wird die Drehbewegung des Drehringes 15 darüber hinaus fortgesetzt, so wird die Schraubenfeder 47 von dem zweiten Kopplungselement 42 bei seiner Drehbewegung mitgenommen. Das Schubrohr 4 folgt dieser Bewegung zusammen mit dem über den Aufnahmekörper am Schubrohr drehfest verbundenen ersten Kopplungselement 35 und der Schraubenfeder 47. Das Schubrohr 4 dreht sich dann um den Drehwinkel, um den der Drehring 15 manuell gedreht wird. Wird die Drehbewegung des Drehringes 15 gestoppt, so wird hierbei auch die Drehbewegung der Schraubenfeder 47 angehalten.

Das drehfest mit dem Aufnahmekörper 25 (und der Last) verbundene erste Kopplungselement 35 dreht jedoch noch geringfügig weiter. Durch die dann gegebene Relativbewegung zwischen dem ersten Kopplungselement 35 und der Schraubenfeder 47 drückt dann eine der Klauen 40 von aussen gegen eines der Enden 50, 51 der Schraubenfeder 47. Hierdurch wird der Durchmesser der Schraubenfeder 47 wieder vergrössert, wodurch zwischen der Schraubenfeder 47 und der Aufnahmehülse 17 wieder ein Reibschluss erzeugt wird. Damit ist der Gabelkopf 16 wieder drehfest mit dem Schubrohr 4 verbunden, wodurch trotz der weiterhin auf das Schubrohr 4 wirkenden Last die Drehbewegung gestoppt ist.

Das Schubrohr 4 hat hierbei in Richtung der Längsbewegungsachse 11 eine Strecke zurückgelegt, die dem zurückgelegten Drehwinkel des Drehringes 15 entspricht. Um mit dem Schubrohr 4 grössere Strecken abzufahren, kann der Drehring 15 mehrmals betätigt werden. Jedem Drehwinkel des Drehrings 15 ist somit eine bestimmte Strecke des Schubrohres 4 zugeordnet.

Anstelle des zuvor beschriebenen Einfahrens des Schubrohrs 4 in das Mantelrohr 12 kann das Schubrohr 4 auch unter Benutzung der (Not-)Verstelleinrichtung 14 um vorbestimmte Strecken ausgefahren werden, wodurch sich die Länge des Linearantriebs vergrössert. Dies kann insbesondere dann vorgesehen sein, wenn die Last als Zugkraft auf den Linearantrieb wirkt. Auch hierzu ist der Drehring 15 um einen der zu verfahrenden Strecke entsprechenden Drehwinkel zu betätigen, wodurch der Reibschluss zwischen der Schraubenfeder 47 und der Aufnahmehülse 17 wiederum gelöst wird. Allerdings ist der Drehring 15 hierzu in einem zur Druckbelastung entgegengesetzten Drehsinn zu betätigen.

Der Kraftfluss der Zugkraft verläuft in diesem Fall über den Gabelkopf 16 und den Absatz 18 der Aufnahmehülse 17 in die Reibscheibe 28 und die erste Bremsscheibe 19. Von hier aus gelangt der Kraftfluss vom Ring 24 in die Mutter 27 und dann in den Aufnahmekörper 25 und damit auch in das Schubrohr 4. Anders als bei einer Druckkraft, die zum Einfahren des Schubrohres - und damit zu einer Verringerung der Länge des Linearantriebs führt, ist somit nicht die zweite Bremsscheibe 20 sondern die erste Bremsscheibe 19 in den Kraftfluss involviert.

## Patentansprüche

1. Linearantrieb mit einer antriebsseitig von einem Motor (5) rotativ antreibbaren Spindel (9), deren Rotationsbewegung zur Lastseite des Linearantriebs hin in eine translatorische Bewegung eines mit der Spindel (9) wirkverbundenen Schubrohres (4) transformierbar ist, wobei
eine drehfeste Verbindung des Schubrohres mit einem Verbindungsteil, mit dem der Linearantrieb an einer zu verstellenden Last anschliessbar ist, mittels einer Verstelleinrichtung (14) lösbar ist, um eine motorunabhängige Längenänderung des Linearantriebs zu ermöglichen, und wobei
die Verstelleinrichtung (14) mit einer Bremse versehen ist, mit der ein durch eine Verschiebekraft bedingtes Drehmoment vom Schubrohr auf den Verbindungsteil (16) übertragbar ist und eine von der Lastseite eingeleitete Verschiebekraft in Form eines Bremsdrehmomentes zumindest teilweise aufnehmbar ist, **dadurch gekennzeichnet, dass**
mittels einem Betätigungselement (15) der Verstelleinrichtung (14) bestimmte Verstelllängen des Schubrohres (4) einstellbar sind, um die hierdurch das Schubrohr (4) für eine Bewegung mit zumindest einer Bewegungskomponente entlang der Längsbewegungsachse (11) freigegeben wird, wobei aufgrund der Freigabe das Schubrohr (4) durch eine über den Verbindungsteil (16) auf das Schubrohr (4) wirkenden Verschiebekraft bewegbar ist.

2. Linearantrieb nach Anspruch 1, **dadurch gekennzeichnet, dass** das Schubrohr (4) bei Erreichen der voreingestellten Verstelllänge durch die Bremse angehalten wird.

3. Linearantrieb nach einem oder beiden der vorhergehenden Ansprüche 1 und 2, **gekennzeichnet durch** eine Bremse, die mit einer ersten und einer zweiten Bremseinrichtung (21, 36) versehen ist, wobei mit der ersten Bremseinrichtung (21) ein lastabhängiges Bremsmoment erzeugbar ist, das kleiner ist als das **durch** eine Last aufgebrachte Drehmoment.

4. Linearantrieb nach Anspruch 3, **gekennzeichnet durch** die zweite Bremseinrichtung (36), mit der ein im Wesentlichen lastunabhängiges Bremsmoment erzeugbar ist.

5. Linearantrieb nach Anspruch 3 oder 4, **dadurch gekennzeichnet, dass** das mit beiden Bremseinrichtungen (21, 36) erzeugbare Bremsmoment unabhängig von der jeweiligen Last stets grösser ist als das durch die Last bedingte Drehmoment.

6. Linearantrieb nach einem der Ansprüche 3 bis 5, **dadurch gekennzeichnet, dass** mit einem Betätigungselement der Verstelleinrichtung an einer der beiden Bremseinrichtungen (21, 36) die Verstelllänge des Schubrohres (4) einstellbar ist.

7. Linearantrieb nach einem der vorhergehenden Ansprüche, **dadurch gekennzeichnet, dass** die Bremse eine Schraubenfeder (47) aufweist, deren Bremswirkung durch Reibschluss zwischen ihrer Aussenfläche (48) und einer Bremsfläche erzielbar ist.

8. Linearantrieb nach Anspruch 7, **dadurch gekennzeichnet, dass** die Schraubenfeder (47) um beliebige Drehwinkel drehbar ist.

9. Linearantrieb nach Anspruch 7 oder 8, **dadurch gekennzeichnet, dass** zur Einstellung der Verstelllänge die Schraubenfeder (47) um einen der Verstelllänge entsprechenden Drehwinkel um die Längsbewegungsachse (11) drehbar ist.

10. Linearantrieb nach einem der vorhergehenden Ansprüche, **dadurch gekennzeichnet, dass** die Bremse zumindest zwei ringförmige Bremsflächen aufweist, von denen sich bei einer Zugbelastung die eine Bremsfläche und bei einer Druckbelastung die andere Bremsfläche im Kraftfluss vom Verbindungsteil zum Schubrohr befindet.

## Claims

1. A linear actuator with a spindle (9) driveable in a rotary manner on the drive side by a motor (5), the rotational motion of which spindle is transformed at the load side of the linear actuator into a translatory motion of an extension tube (4) in active connection with the spindle (9), whereby
a torsion-resistant connection of the extension tube to a connecting part, with which the linear actuator can be connected to a load to be displaced, is detachable by means of an adjusting device (14), in order to enable a motor-independent length change of the linear actuator, and whereby
the adjusting device (14) is provided with a brake, with which a torque produced by a displacement force can be transmitted from the extension tube to the connecting part (16) and a displacement force introduced from the load side can be taken up at least partially in the form of a braking torque, **characterised in that**,
by means of an actuating element (15) of the adjusting device (14), certain displacement lengths of the extension tube (4) can be adjusted, over which the extension tube (4) is thereby released for motion with at least one component of motion along the longitudinal axis of motion (11), whereby, as a result of the release, the extension tube (4) can be moved by a displacement force acting via the connecting part (16) on the extension tube (4).

2. Linear actuator according to claim 1, **characterised in that** the extension tube (4) is stopped by the brake when it reaches the pre-adjusted displacement length.

3. Linear actuator according to one or both of preceding claim 1 and 2, **characterised by** a brake which is provided with a first and a second braking device (21, 36), whereby a load-dependent braking torque can be generated with the first braking device (21) that is smaller than the torque applied by the load.

4. Linear actuator according to claim 3, **characterised by** the second braking device (36), with which an essentially load-independent braking torque is generated.

5. Linear actuator according to claim 3 or 4, **characterised in that** the braking torque that can be generated with the two braking devices (21, 36) independently of the respective load is always greater than the torque produced by the load.

6. Linear actuator according to any one of claims 3 to 5, **characterised in that** the displacement length of the extension tube (4) can be adjusted with an actuating element of the adjusting device at one of the two braking devices (21, 36).

7. Linear actuator according to any one of the preceding claims, **characterised in that** the brake has a helical spring (47), the braking effect whereof can be achieved by frictional engagement between its outer area (48) and a braking area.

8. Linear actuator according to claim 7, **characterised in that** the helical spring (47) can be rotated through any angle of rotation.

9. Linear actuator according to claim 7 or 8, **characterised in that**, in order to adjust the displacement length, the helical spring (47) can be rotated through an angle of rotation about the longitudinal axis of motion (11) corresponding to the displacement length.

10. Linear actuator according to any one of the preceding claims, **characterised in that** the brake has at least two circular braking areas, whereof one braking area is located in the force flow from the connecting part to the extension tube in the presence of a tensile load and the other braking area is in the force flow from the connecting part to the extension tube in the presence of a compressive load.

## Revendications

1. Actionneur linéaire présentant une broche (9) pouvant être entraînée en rotation côté commande par un moteur (5) et dont le mouvement de rotation en direction du côté charge de l'actionneur linéaire est transformable en un mouvement translatoire d'un tube poussoir (4) en liaison fonctionnelle avec la broche (9),
une liaison fixe en rotation du tube poussoir, établie par une pièce de liaison permettant de raccorder l'actionneur linéaire à une charge à déplacer, pouvant être désengagée au moyen d'un dispositif de déplacement (14) afin de permettre un changement de longueur de l'actionneur linéaire indépendamment du moteur, et
le dispositif de déplacement (14) étant équipé d'un frein permettant de transmettre un couple de rotation, dû à une force de déplacement, du tube poussoir à la pièce de liaison (16) et une force de déplacement introduite par le côté charge pouvant être absorbée du moins partiellement sous forme d'un couple de rotation de freinage, **caractérisé en ce que**,
au moyen d'un élément d'actionnement (15) du dispositif de déplacement (14), certaines longueurs de déplacement du tube poussoir (4) sont réglables afin de libérer ainsi le tube poussoir (4) pour qu'il effectue un mouvement ayant au moins une composante de mouvement le long de l'axe de mouvement longitudinal (11), le tube poussoir (4) pouvant, du fait de sa libération, être déplacé par une force de déplacement agissant par l'intermédiaire de la pièce de liaison (16) sur le tube poussoir (4).

2. Actionneur linéaire selon la revendication 1, **caractérisé en ce que** le tube poussoir (4), une fois que la longueur de déplacement fixée au préalable est atteinte, est arrêté par le frein.

3. Actionneur linéaire selon une ou deux des revendications précédentes 1 et 2, **caractérisé par** un frein qui est équipé d'un premier et d'un deuxième dispositif de freinage (21, 36), le premier dispositif de freinage (21) permettant de générer un couple de freinage dépendant de la charge et qui est inférieur au couple de rotation appliqué par une charge.

4. Actionneur linéaire selon la revendication 3, **caractérisé par** le deuxième dispositif de freinage (36) qui permet de générer un couple de freinage sensiblement indépendant de la charge.

5. Actionneur linéaire selon la revendication 3 ou 4, **caractérisé en ce que** le couple de freinage pouvant être généré par les deux dispositifs de freinage (21, 36) indépendamment de la charge respective est toujours supérieur au couple de rotation dû à la charge.

6. Actionneur linéaire selon l'une des revendications 3 à 5, **caractérisé en ce que** la longueur de déplacement du tube poussoir (4) est réglable à l'aide d'un élément d'actionnement du dispositif de déplacement sur un des deux dispositifs de freinage (21, 36).

7. Actionneur linéaire selon l'une des revendications précédentes, **caractérisé en ce que** le frein présente un ressort à boudin (47) dont l'effet de freinage peut être obtenu par contact de frottement entre sa surface extérieure (48) et une surface de freinage.

8. Actionneur linéaire selon la revendication 7, **caractérisé en ce que** le ressort à boudin (47) peut être tourné selon un angle de rotation quelconque.

9. Actionneur linéaire selon la revendication 7 ou 8, **caractérisé en ce que**, pour régler la longueur de déplacement, le ressort à boudin (47) peut être tourné autour de l'axe de mouvement longitudinal (11) selon un angle de rotation correspondant à la longueur de déplacement.

10. Actionneur linéaire selon l'une des revendications précédentes, **caractérisé en ce que** le frein présente au moins deux surfaces de freinage de forme annulaire dont une surface de freinage se trouve en cas de sollicitation à la traction, et l'autre surface de freinage se trouve en cas de sollicitation à la pression, en correspondance mécanique depuis la pièce de liaison jusqu'au tube poussoir.
